# EUROPEAN PATENT APPLICATION

(11) **EP 4 485 608 A1**
(43) Date of publication of application: **01.01.2025**
(21) Application number: 23877567.0
(22) Date of filing: 26.09.2023
(51) Int. Cl.: H01M 10/0585, H01M 4/139, H01M 4/04, H01M 10/052, H01M 10/0562

(54) **ALL-SOLID-STATE BATTERY MANUFACTURING METHOD**

(30) Priority: 14.10.2022 KR 20220132195
(71) Applicant: LG Energy Solution, Ltd., Seoul 07335 (KR)
(72) Inventor: LEE, Jaegil, Daejeon 34122 (KR); WOO, Seunghe, Daejeon 34122 (KR); CHOI, Ran, Daejeon 34122 (KR); LEE, Choonghyeon, Daejeon 34122 (KR); LEE, Jeongbeom, Daejeon 34122 (KR)
(74) Representative: Goddar, Heinz J.
(86) International application number: PCT/KR2023/014936
(87) International publication number: WO 2024/080639

(57) **Abstract**

A method for manufacturing an all-solid-state battery capable of suppressing a short phenomenon occurring at a lateral portion during battery operation by laminating each of the unit cells after isostatic pressurization is provided. The method of manufacturing an all-solid-state battery includes the steps of a) manufacturing a monocell or bicell by sequentially laminating a solid electrolyte and a positive electrode on one side or both sides of a negative electrode; b) isostatically pressurizing the manufactured monocell or bicell; and c) laminating two or more of the isostatically pressurized monocells or bicells, and interposing a positive electrode current collector between one cell and the other cell, thereby contacting both sides of the interposed positive electrode current collector with the positive electrodes.

## Description

### [Technical Field]

This application claims the benefit of priority to Korean Patent Application No. 10-2022-0132195 filed on October 14, 2022, all contents of which are incorporated as a part of the present specification.

The present invention relates to a method of manufacturing an all-solid-state battery, and more particularly, to a method of manufacturing an all-solid-state battery that can suppress a short phenomenon that occurs at a lateral portion of the battery during operation by laminating each unit cell after isostatic pressurization.

### [Background Art]

With the explosive growth in technology development and demand for mobile devices and automobiles, more research is being done on secondary batteries with high energy density, discharge voltage, and good output stability. Such secondary batteries include lithium-based secondary batteries such as lithium-sulfur batteries, lithium-ion batteries and lithium-ion polymer batteries. Furthermore, these secondary batteries can be categorized into cylindrical, prismatic and pouch-type batteries depending on their shape, and attentions and demands on pouch-type batteries are increasing. Pouch-type battery cells can be laminated with high integration and have high energy density per weight, and they are also inexpensive and easy to be modified. Therefore, pouch-type battery cells can be fabricated into shapes and sizes that are applicable to various mobile devices and automobiles.

These pouch-type battery cells have a laminated structure of multiple unit cells, typically including a positive electrode, a negative electrode, and a separating film interposed between the positive and negative electrodes (i.e., an electrode assembly or a stack cell), and these cells can be productized by introducing the electrode assembly in a battery case and then injecting an electrolyte, or introducing a solid electrolyte in the electrode assembly from the outset (i.e., an all-solid-state battery).

Among them, all-solid-state batteries are superior to other types of secondary batteries in terms of safety, and are gaining attention in the field of electric vehicles and mobile devices. In other words, all-solid-state batteries are batteries that replace the electrolyte used in conventional lithium secondary batteries from a liquid to a solid, and as a result, safety can be greatly improved by not using flammable solvents, so that ignition or explosion caused by decomposition reactions of conventional electrolytes does not occur at all. In addition, all-solid-state batteries have the advantage of dramatically improving the energy density relative to the mass or volume of the battery because Li metal or Li alloy can be used as the negative electrode material.

These all-solid-state batteries typically utilize a warm isostatic pressing (WIP) to create an interfacial bond between the electrode and the solid electrolyte during fabrication. If the interface between the electrode and the solid electrolyte is not properly bonded and is not well formed, it is difficult for lithium (Li) ions to move and the battery cannot be operated.

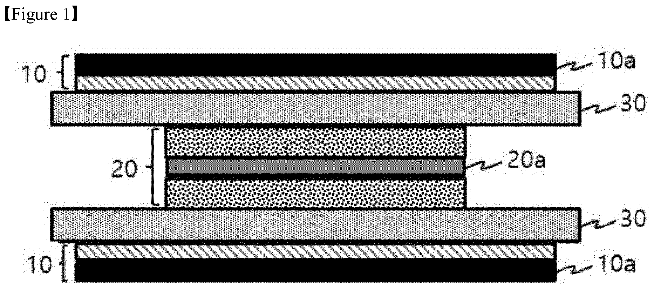

FIG. 1 is a side view schematic illustrating the lamination of the electrodes of a conventional all-solid-state battery. As shown in FIG. 1, a conventional all-solid-state battery generally has a structure in which a positive electrode (20) (wherein 20a is a positive electrode current collector) having a shorter length than the negative electrode (10) (wherein 10a is a negative electrode current collector) is positioned between the negative electrodes (10), and solid electrolytes (30) are interposed between the negative electrodes (10) and the positive electrode (20). Such a conventional all-solid-state battery, for example, after sequentially laminating the negative electrode (10), the solid electrolyte (30), the positive electrode (20), the solid electrolyte (30), and the negative electrode (10), isostatic pressurization must be performed for interfacial bonding between the electrode and the solid electrolyte in the state where the laminating is completed.

However, since a conventional all-solid-state battery has a structure as shown in FIG. 1 (i.e., a structure in which a positive electrode is interposed between the negative electrodes and the length of the positive electrode is shorter than the length of the negative electrodes), when an isostatic pressure is applied simultaneously at the top and bottom with the same pressure, both ends (or lateral portions) of each of the upper negative electrode and the lower negative electrode are bent. In the course of this process, the solid electrolyte layer and the negative electrode layer are prone to cracking, and since a proper pressure cannot be applied to these portions during battery operation, lithium dendrite growth is prone to occur, resulting in a short phenomenon.

In other words, in conventional all-solid-state batteries, isostatic pressure is applied for the interface bonding between the electrode and the solid electrolyte after the lamination is completed, and since the positive electrode is interposed between the negative electrodes and the length of the positive electrode is shorter than the length of the negative electrodes, a short phenomenon is inevitable between the end portion of the negative electrode and a lateral portion of the end portion of the positive electrode facing the negative electrode during operation. Therefore, it is necessary to find a way to eliminate the possibility of short phenomenon during battery operation while applying isostatic pressure for the interface bonding between an electrode and a solid electrolyte.

### [Disclosure]

### [Technical Problem]

Accordingly, the present invention aims to provide a method for manufacturing an all-solid-state battery capable of suppressing a short phenomenon occurring at a lateral portion during battery operation by laminating each unit cell after isostatic pressurization.

### [Technical Solution]

To achieve the above objective, the present invention provides a method of manufacturing an all-solid-state battery, comprising the steps of a) manufacturing a monocell or bicell by sequentially laminating a solid electrolyte and a positive electrode on one side or both sides of a negative electrode; b) isostatically pressurizing the manufactured monocell or bicell; and c) laminating two or more of the isostatically pressurized monocells or bicells, and interposing a positive electrode current collector between one cell and the other cell, thereby contacting both sides of the interposed positive electrode current collector with the positive electrodes.

### [Effects of the Invention]

According to the method of manufacturing an all-solid-state battery according to the present invention, since each unit cell is laminated after being isostatically pressurized, isostatic pressurization is not required when the laminating is completed, thereby achieving the advantage of suppressing a short phenomenon that occurs at a lateral portion of the battery during operation.

### [Description of Drawings]

FIG. 1 is a side view schematic illustrating the lamination of the electrodes of a conventional all-solid-state battery.
FIG. 2 is a side cross-sectional view of two isostatically pressurized monocells laminated with a positive electrode current collector interposed therebetween in an all-solid-state battery according to one embodiment of the present invention.
FIG. 3 is a side cross-sectional view of a plurality of isostatically pressurized bicells laminated with a positive electrode current collector interposed therebetween in an all-solid-state battery according to another embodiment of the present invention.
FIG. 4 is a graph comparing and contrasting the life characteristics and capacity retention rate of secondary batteries manufactured according to the working example and the comparative example of the present invention.

### [Best Mode]

The present invention is described in detail with reference to the drawings attached hereto.

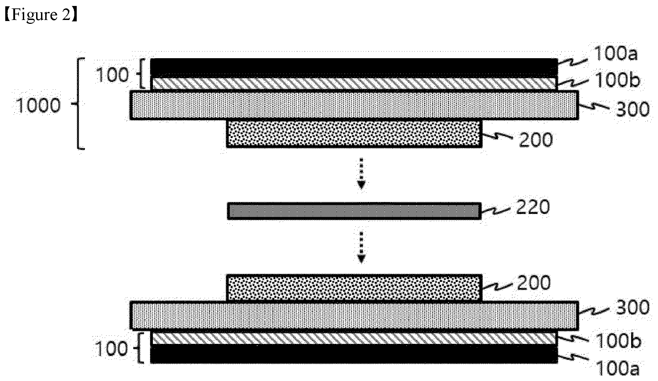

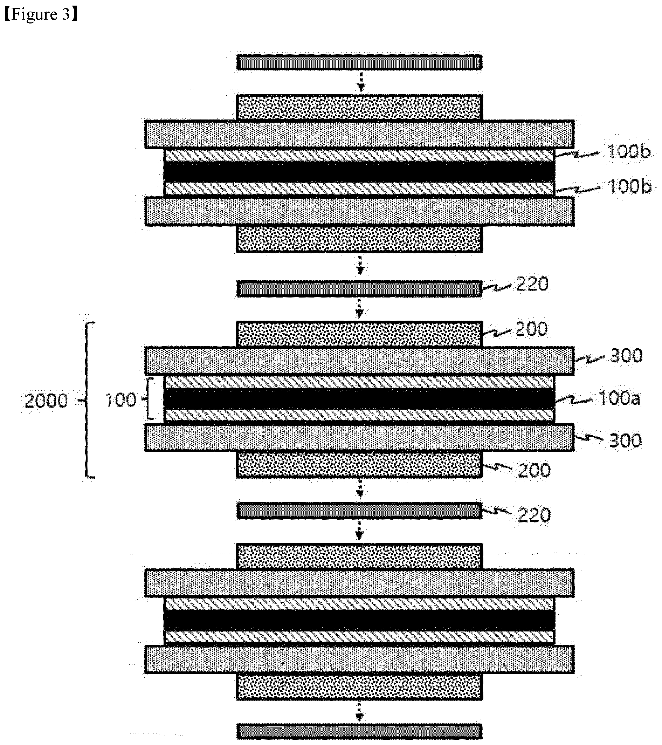

FIG. 2 is a cross-sectional perspective view of two isostatically pressurized monocells laminated with a positive electrode current collector interposed therebetween in an all-solid-state battery according to one embodiment of the present invention, and FIG. 3 is a cross-sectional perspective view of multiple isostatically pressurized bicells laminated with a positive electrode current collector interposed therebetween in an all-solid-state battery according to another embodiment of the present invention.

Referring to FIGS. 2 and 3, the method of manufacturing an all-solid-state battery according to the present invention comprises the steps of a) manufacturing a monocell (1000) or a bicell (2000) by sequentially laminating a solid electrolyte (300) and a positive electrode (200) on one side or both sides of a negative electrode (100), b) isostatically pressurizing the manufactured monocell (1000) or bicell (2000); and c) laminating two or more isostatically pressurized monocells (1000) or bicells (2000), and interposing a positive electrode current collector (220) between one cell and the other cell, thereby contacting both sides of the interposed positive electrode current collector (220) with the positive electrodes (200).

All-solid-state batteries are becoming popular, especially in the electric vehicle and mobile device fields, due to their superiority over other types of secondary batteries in terms of safety. In other words, all-solid-state batteries are batteries that replace the electrolyte used in conventional lithium secondary batteries from a liquid to a solid, which greatly improves safety by not using flammable solvents, so that ignition or explosion caused by decomposition reactions of conventional electrolytes does not occur at all. In addition, all-solid-state batteries have the advantage of dramatically improving the energy density relative to the mass and volume of the battery because Li metal or Li alloy can be used as the negative electrode material. These all-solid-state batteries typically utilize a warm isostatic pressing (WIP) for interfacial bonding between the electrode and the solid electrolyte during fabrication. If the interface between the electrode and the solid electrolyte is not properly bonded and is not well formed, it is difficult for lithium (Li) ions to move and the battery cannot be operated.

On the other hand, as shown in FIG. 1, in a conventional all-solid-state battery, a positive electrode (20) (wherein 20a is a positive electrode current collector) having a shorter length than the negative electrode (10) (wherein 10a is a negative electrode current collector) is generally positioned between the negative electrodes (10). This is to prevent lithium (Li) precipitation on the sliding part due to the difference between the contact areas of the positive electrode and the negative electrode due to the electrode sliding phenomenon, which causes a deterioration in the lifetime of the battery, and furthermore, may even cause explosions and fire accidents.

Furthermore, a conventional all-solid-state battery has a solid electrolyte (30) interposed between the negative electrodes (10) and the positive electrodes (20). Further, in a conventional all-solid-state battery, for example, the negative electrode (10), the solid electrolyte (30), the positive electrode (20), the solid electrolyte (30), and the negative electrode (10) are laminated sequentially, and isostatic pressurization must be performed for the interfacial bond between the electrode and the solid electrolyte after the laminating is completed. However, since a conventional all-solid-state battery has a structure as shown in FIG. 1 (i.e., a structure in which a positive electrode is interposed between the negative electrodes and the length of the positive electrode is shorter than the length of the negative electrodes), when the same isostatic pressure is applied at the same time to the upper and lower portions, the end portions (or lateral portions) of the upper negative electrode and the lower negative electrode are bent. In the course of the process, the solid electrolyte layer and the negative electrode layer are prone to cracking, and since a proper pressure cannot be applied to these portions during battery operation, lithium dendrite growth is prone to occur, resulting in a short phenomenon.

In other words, in a conventional all-solid-state battery, isostatic pressure must be applied to the interfacial bonding between the electrode and the solid electrolyte after the laminating is completed, and since the positive electrode is interposed between the negative electrodes and the length of the positive electrode is shorter than the length of the negative electrodes, a short phenomenon between the end portion of the negative electrode and a lateral portion of the end portion of the positive electrode facing the negative electrode inevitably occurs during operation. However, the present applicant has invented a method of isostatically pressurizing each unit cell (monocell or bicell) and then laminating same. Since no isostatic pressurization is required at the time that the laminating is completed, a short phenomenon occurring at a lateral portion during battery operation can be suppressed.

In order to manufacture an all-solid-state battery according to the present invention, a monocell (1000) or a bicell (2000) is first manufactured by sequentially laminating a solid electrolyte (300) and a positive electrode (or a positive electrode not including a current collector or a free-standing positive electrode (200)) on one side or both sides of the negative electrode (100) (step a). The monocell (1000) contains only one negative electrode (100) and one positive electrode (200) and is isostatically pressurized in the condition that the longest negative electrode (100) is placed at the bottom, and this process should be carried out prior to isostatical pressurization, so there is no room for a short between the positive electrodes and the negative electrodes even if they are electrically connected. Furthermore, in the bicell (2000), the negative electrode (100) is composed of a single layer in which negative electrode active material layers (100b) are placed on both sides of the negative electrode current collector (100a), and positive electrodes (200) are placed on both sides thereof, so there is no room for a short between the positive electrodes and the negative electrodes even if they are electrically connected. On the other hand, both of the positive electrodes (200) included in the monocell (1000) and the positive electrodes (200) included in the bicell (2000) should be free-standing positive electrodes that do not include a positive electrode current collector.

With respect to the structures of the monocell (1000) and the bicell (2000), the monocell (1000) has a structure in which a solid electrolyte (300) and a positive electrode (200) not including a current collector are sequentially laminated on one side of the negative electrode (100), as shown in FIG. 2. More specifically, as shown in FIG. 2, the monocell (1000) has a structure in which a solid electrolyte (300) and a positive electrode (200) not including a current collector are sequentially laminated on one side of the negative electrode active material layer (100b), and a negative electrode current collector (100a) may be attached to the other side of the negative electrode active material layer (100b). In other words, the negative electrode (100) of the monocell (1000) includes a negative electrode active material layer (100b); and a negative electrode current collector (100a) attached to one side of the negative electrode active material layer (100b); and the other side of the negative electrode active material layer (100b) has a sequentially laminated structure of solid electrolyte (300) and positive electrode (200).

The bicell (2000) has a structure in which a solid electrolyte (300) and a positive electrode (200) that does not include a current collector are sequentially laminated on both sides of the negative electrode (100), as shown in FIG. 3. More specifically, the bicell (2000) has a structure in which the solid electrolyte (300) and the positive electrode (200) not including the current collector are sequentially laminated on the negative electrode active material layers (100b) facing each other positioned on both sides of the negative electrode current collector (100a), as shown in FIG. 3. In other words, the negative electrode (100) of the bicell (2000) includes a negative electrode current collector (100a); and a negative electrode active material layer (100b) attached to both sides of the negative electrode current collector (100a), and has a structure in which a solid electrolyte (300) and a positive electrode (200) are sequentially laminated on each of the negative electrode active material layers (100b).

Moreover, in both of the monocell (1000) and the bicell (2000), it is preferred that the length of the negative electrode (100) is longer than the length of the positive electrode (200) based on the vertical cross-section, as shown in FIGS. 2 and 3. This is to prevent lithium precipitation on the sliding portion due to the difference between the contact areas of the positive electrode and the negative electrode due to the electrode sliding phenomenon, which may cause a deterioration in the life of the battery and, furthermore, may cause explosions and fire accidents. On the other hand, although the above descriptions refer to FIGS. 2 and 3, it is obvious that the monocell or bicell can be modified into various structures and forms if the object of the present invention can be achieved.

As described above, after manufacturing the monocell (1000) or bicell (2000) by sequentially laminating the solid electrolyte (300) and the positive electrode (200) not including the current collector on one side or both sides of the negative electrode (100), isostatic pressurization of the manufactured monocell (1000) or bicell (2000) is performed (step b). This is a process for interfacial bonding between the electrode and the solid electrolyte, and as mentioned above, the isostatic pressurization is performed under conditions where there is no possibility of a short between the positive electrode and the negative electrode. In the monocell (1000), since the isostatic pressurization is performed in a simplified state in which the positive electrode (200) is located on the upper portion of the negative electrode (100), sufficient pressure can be applied so that there is no possibility of the occurrence of a short phenomenon between the positive electrode and the negative electrode. Also, in the bicell (2000), since the negative electrode (100) is composed of a single layer in which negative electrode active material layers (100b) are placed on both sides of the negative electrode current collector (100a), and positive electrodes (200) are placed on both sides thereof, the negative electrode is not bent even when isostatic pressure is applied, so there is no room for a short between the positive electrode and negative electrode.

The isostatic pressurization may be in any manner selected from the group consisting of warm isostatic pressing (WIP), hot isostatic pressing (HIP), and cold isostatic pressing (CIP). Moreover, it may be preferable that the isostatic pressurization is performed within a suitable temperature range wherein the electrode components are thermally stable while achieving good interfacial contact between the electrodes by molding of the solid electrolyte. For example, the warm isostatic pressure (WIP) may be performed at 45 to 100 °C.

In order to laminate the isostatically pressurized monocells (1000) or bicells (2000) as in the following step, two or more monocells (1000) or bicells (2000) must be prepared in an isostatically pressurized state, i.e., if the monocells (1000) are to be laminated as unit cells, each of the two monocells (1000) must be prepared in an isostatically pressurized state, as shown in FIG. 2. Furthermore, in the case of laminating the bicells (2000) as unit cells, a number of bicells (2000) required for the size of the desired all-solid-state battery should be prepared in an isostatically pressurized state. In other words, in the case of laminating the bicells (2000) as unit cells, there is no particular limitation to the number of bicells (2000) to be isostatically pressurized. Furthermore, in FIG. 3, a total of three bicells (2000) are being laminated, so three isostatically pressurized bicells (2000) should be prepared. However, it is noted that FIG. 3 is mere one of the embodiments.

Finally, after isostatically pressurizing the monocells (1000) or bicells (2000) as described above, the step of laminating two or more of the isostatically pressurized monocells (1000) or bicells (2000), and interposing a positive electrode current collector (220) between one cell and the other cell, so as to contact both sides of the interposed positive electrode current collector (220) with the positive electrodes (200) (not including the current collector), is performed (step c).

Specifically, in the case of laminating the monocells (1000) as unit cells, the manufacture of an all-solid-state battery can be completed by laminating the positive electrode current collector (220) on top of one monocell (1000), followed by laminating the other monocell (1000), as shown in FIG. 2 (the process of receiving the battery inside a storage case such as a pouch can be performed separately). The two monocells (1000) are laminated with the "positive electrodes not including a current collector (200)" facing each other included therein, so that the both sides of the positive electrode current collector (220) interposed therebetween and the "positive electrodes not including a current collector (200)" are in contact with and face each other.

In the case of laminating the bicells (2000) as unit cells, as shown in FIG. 3, the manufacturing of an all-solid-state battery is completed by repeating one or more times the step of laminating the positive electrode current collector (220) on top of one bicell (2000) and then laminating the other bicell (2000) (the step of receiving the battery inside a storage case such as a pouch can be performed separately). There is no particular limitation to the number of repetitions, and it can be varied depending on the scale of the desired all-solid-state battery to be produced. At this time, the bicells (2000) are laminated with the "positive electrodes not including a current collector (200)" included therein facing each other, so that both sides of the positive electrode current collector (220) interposed therebetween and the "positive electrodes not including a current collector (200)" are in contact with and face each other.

Furthermore, when the bicells (2000) are laminated as unit cells, as shown in FIG. 3, in addition to between one cell and the other cell, positive electrode current collectors (220) are provided at the outermost portions in the laminating direction of the battery, and can be in contact with the "positive electrodes (200) not including a current collector" facing each other. In other words, when two or more bicells (2000) are laminated, positive electrode current collectors (220) are provided at the outermost portions in the laminating direction of the battery, and can be in contact with and face the free-standing positive electrodes (200). The positive electrode current collector (220) may be any of those known in the art, for example, an aluminum foil.

Isostatic pressurization is not required during or after the above-mentioned laminating process (step c), that is, no isostatic pressurization is performed after step b), wherein isostatic pressurization is performed. Already, in step b), isostatic pressurization is performed for the interfacial bonding between the electrode and the solid electrolyte of the monocell (1000) or bicell (2000), so that there is no problem of migration of lithium ions, and during the laminating process in step c), there is no interfacial bonding between the electrode and the solid electrolyte, but only the bonding between the "positive electrodes not including a current collector (200)" and the positive electrode current collector (220), because the bonding between the "positive electrodes not including a current collector (200)" and the positive electrode current collector (220) is sufficient for electron conduction even with only weak contact.

Therefore, according to the method of manufacturing an all-solid-state battery according to the present invention, unit cells including a single layer of negative electrode are laminated after isostatic pressurization, and no isostatic pressurization is required when the laminating is completed. In other words, during the manufacture of the all-solid-state battery, both ends of the negative electrode (100) included in any one of monocell (1000) or bicell (2000) are kept at a certain distance from each other and from lateral portions of both ends of the positive electrode (200) included in the adjacent (facing) monocell (1000) or bicell (2000), and accordingly, a short phenomenon between the positive electrode and the negative electrode during battery operation does not occur.

On the other hand, the all-solid-state battery manufactured according to the method of manufacturing an all-solid-state battery according to the present invention can be accommodated in a storage case such as a pouch. Further, the use of the all-solid-state battery is not particularly limited. In the all-solid-state battery, the positive electrode may include a positive electrode active material, a conductive material and a binder in granular form. The positive electrode active material can be any positive electrode active material used for a lithium ion secondary battery without any particular limitation. The positive electrode active material may be a lithium transition metal oxide comprising one or more transition metals. For example, the positive electrode active material may be selected from the group consisting of LiCoO₂, LiNiO₂, LiMnO₂, Li₂MnO₃, LiMn₂O₄, Li(NiₐCo_{b}Mn_{c})O₂ (wherein 0<a<1, 0<b<1, 0<c<1, and a+b+c=1), LiNi_{1-y}Co_{y}O₂ (wherein O<y<1), LiCo_{1-y}Mn_{y}O₂ (wherein O<y<1), LiNi_{1-y}Mn_{y}O₂ (wherein O<y<1), Li(NiₐCo_{b}Mn_{c})O₄ (wherein 0<a<2, 0<b<2, 0<c<2, and a+b+c=2), LiMn_{2-z}Ni_{z}O₄ (wherein 0<z<2), LiMn_{2-z}Co_{z}O₄ (wherein 0<z<2), and combinations thereof.

Furthermore, the binder is mixed with the positive electrode active material, which consists of powdered particulates, and the conductive material, to bind the respective components, thereby aiding in the growth of the particles. Since sulfide-based solid electrolytes, for example, have moisture-sensitive properties, such as the generation of H₂S gas upon contact with moisture, it is desirable to exclude as much moisture as possible from the formation of the granules. The binder may be an organic binder, wherein the organic binder means a binder that is soluble or dispersible in an organic solvent, in particular N-methylpyrrolidone (NMP), as distinguished from an aqueous binder wherein water is the solvent or dispersing medium. For example, the binder may be selected from the group consisting of, but not limited to, polyvinylidene fluoride (PVDF), vinylidene fluoride-hexafluoropropylene copolymer (PVDF-co-HFP), polyvinyl alcohol, starch, hydroxypropyl cellulose, regenerated cellulose, polyvinylpyrrolidone, polyimide, polyamideimide, polyethylene, polypropylene, ethylenepropylene-diene monomer (EPDM), sulfonated EPDM, styrene-butylene rubber and fluorinated rubber.

In the all-solid-state battery, the solid electrolyte may comprise at least one selected from a sulfide-based solid electrolyte, a polymer-based solid electrolyte, and an oxide-based solid electrolyte, and may preferably comprise only a sulfide-based solid electrolyte. The sulfide-based solid electrolyte may comprise a lithium salt, wherein the lithium salt is an ionizable lithium salt, which may be represented by Li⁺X⁻. The negative ion of the lithium salt is not particularly limited, but may include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ or (CF₃CF₂SO₂)₂N⁻.

Furthermore, the sulfide-based solid electrolyte contains sulfur (S) and has the ionic conductivity of metals from Group 1 or 2 of the periodic table, and may include a Li-P-S-based glass or a Li-P-S-based glass-ceramic. Non-limiting examples of such sulfide-based solid electrolyte include Li₂S-P₂S₅, Li₂S-LiI-P₂S₅, Li₂S-LiI-Li₂O-P₂S₅, Li₂S-LiBr-P₂S₅, Li₂S-LiCl-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SnS, Li₂S-P₂S₅-Al₂S₃, Li₂S-GeS₂ and Li₂S-GeS₂-ZnS, and the sulfide-based solid electrolyte may comprise one or more selected therefrom.

The solid electrolyte can function as a separating film in a typical lithium secondary battery (that is, electrically isolating the negative electrode and the positive electrode while allowing lithium ions to pass through). Meanwhile, the all-solid-state battery can be utilized as a semi-solid-state battery by including a liquid electrolyte as needed, wherein a separate polymeric separating film may be further required.

In the all-solid-state battery, the negative electrode may comprise a negative electrode active material that can be used in a lithium ion secondary battery. For example, the negative electrode active material may include one or more selected from the group consisting of carbon such as anthracite or graphitized carbon; metal complex oxide such as LiₓFe₂O₃ (wherein 0≤x≤1), LiₓWO₂ (wherein 0≤x≤1), or SnₓMe₁₋ₓMe'_{y}O_{z} (wherein Me is Mn,Fe,Pb or Ge; Me' is Al, B, P, Si, Group 1, 2 or 3 elements of the periodic table, or halogens; 0<x≤1; 1≤y≤3; and 1≤z≤8); lithium metal; lithium alloy; silicon-based alloy; tin-based alloy; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ or Bi₂O₅; conductive polymer such as polyacetylene; Li-Co-Ni based material; titanium oxide; and lithium titanium oxide.

The present invention also provides a battery module comprising the all-solid-state battery as a unit cell, a battery pack comprising the battery module, and a device comprising the battery pack as a power source. Specific examples of such devices include, but are not limited to, a power tool powered by an electric motor; an electric vehicle, including an electric vehicle (EV), a hybrid electric vehicle (HEV) and a plug-in hybrid electric vehicle (PHEV); an electric two-wheeler, including an electric bicycle (E-bike) and an electric scooter; an electric golf cart; and a power storage system.

Hereinafter, Examples are presented to facilitate an understanding of the present invention. The following Examples are provided to illustrate the present invention, but it is obvious to those skilled in the art that various changes and modifications can be made within the scope and the technical idea of the present invention, and it is also obvious that such changes and modifications fall within the scope of the appended claims.

### [Example 1] Manufacture of an all-solid-state battery

After warm isostatic pressurization (WIP) of a monocell having a structure in which a solid electrolyte and a positive electrode not including a current collector (free-standing positive electrode) are sequentially laminated on one side of the negative electrode, a positive electrode current collector is laminated on the other side of the free-standing positive electrode not facing the solid electrolyte, and a monocell identical to the isostatically pressurized monocell is further laminated to make the free-standing positive electrode and the positive electrode current collector face each other to produce an all-solid-state battery. The length of the negative electrode included in the upper monocell and the length of the negative electrode included in the lower monocell were configured to be the same, and the length of the free-standing positive electrode included in the upper monocell and the length of the free-standing positive electrode included in the lower monocell were configured to be the same but shorter than the length of the negative electrode.

### [Comparative Example 1] Manufacture of an all-solid-state battery

An all-solid-state battery was prepared by performing the same as in Example 1 above, except that warm isostatic pressurization (WIP) was performed after the lamination was completed instead of warm isostatic pressurization (WIP) in the monocell state (that is, no isostatic pressurization was carried out prior to lamination).

### [Experimental Example 1] Evaluation of battery charge and discharge

The all-solid-state batteries prepared in Example 1 and Comparative Example 1 were charged and discharged under the following conditions to observe the conditions of the batteries and to evaluate the life characteristics and capacity retention rate of the batteries. The evaluation temperature was 25 °C.

### [Charge and discharge conditions]

### Charge/Discharge at 0.1C (Voltage range: 4.25V 3V, CV 0.05C)

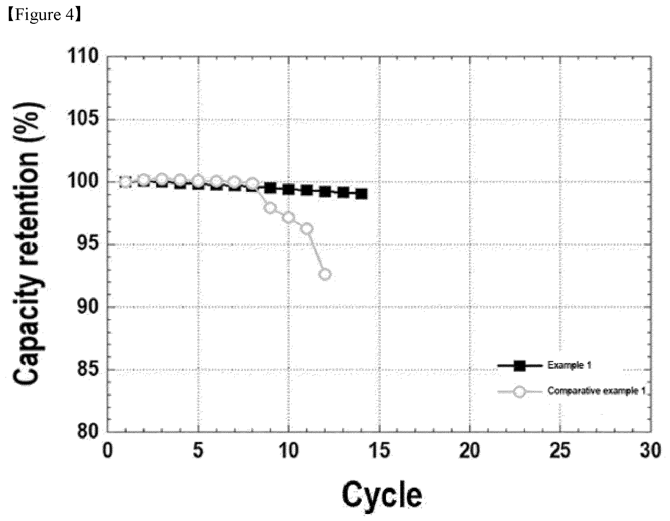

As a result of observing the conditions of the batteries while charging and discharging the batteries as described above, it was confirmed that the battery manufactured in Example 1 operated normally, while the battery manufactured in Comparative Example 1 experienced a short phenomenon during charging and the battery incompletely operated. FIG. 4 is a graph comparing and contrasting the life characteristics and capacity retention rate of secondary batteries manufactured according to the working example and the comparative example of the present invention. As shown in FIG. 4, the battery manufactured in Comparative Example 1 was not able to charge and discharge normally due to a short phenomenon (the evaluation was terminated due to the short at the 10^{th} cycle), while the battery manufactured in Example 1 was able to charge and discharge normally because it was operated without a short phenomenon.

### [Reference numerals].

10, 100: Negative electrode (10a, 100a: negative electrode current collector, 100b: negative electrode active material layer)
20: Positive electrode (20a: Positive electrode current collector)
200: Free-standing positive electrode
220: Positive electrode current collector
30, 300: Solid electrolyte
1000: Monocell
2000: Bicell

## Claims

1. A method of manufacturing an all-solid-state battery comprising the steps of:
a) manufacturing a monocell or bicell by sequentially laminating a solid electrolyte and a positive electrode on one side or both sides of a negative electrode;
b) isostatically pressurizing the prepared monocell or bicell; and
c) laminating two or more of the isostatically pressurized monocells or bicells, and interposing a positive electrode current collector between one cell and the other cell, thereby contacting both sides of the interposed positive electrode current collector with the positive electrodes.

2. The method of manufacturing an all-solid-state battery according to claim 1, wherein the positive electrode included in the monocell and the positive electrode included in the bicell are free-standing positive electrodes that do not include a positive electrode current collector.

3. The method of manufacturing an all-solid-state battery according to claim 1, wherein no isostatic pressurization is performed after step b).

4. The method of manufacturing an all-solid-state battery according to claim 2, wherein during the lamination in step c), only the bonding between the free-standing positive electrode and the positive electrode current collector is made, with no interfacial bonding between the electrode and the solid electrolyte.

5. The method of manufacturing an all-solid-state battery according to claim 1, wherein the monocell and bicell are **characterized in that** the length of the negative electrode is longer than the length of the positive electrode.

6. The method of manufacturing an all-solid-state battery according to claim 1, wherein the negative electrode of the monocell comprises a negative electrode active material layer; and a negative electrode current collector attached to one side of the negative electrode active material layer; and a solid electrolyte and a positive electrode are sequentially laminated on the other side of the negative electrode active material layer.

7. The method of manufacturing an all-solid-state battery according to claim 1, wherein the negative electrode of the bicell comprises a negative electrode current collector; and a negative electrode active material layer attached to both sides of the negative electrode current collector, wherein a solid electrolyte and a positive electrode are sequentially laminated on each of the negative electrode active material layers.

8. The method of manufacturing an all-solid-state battery according to claim 1, wherein the isostatic pressure is selected from the group consisting of a warm isostatic pressure (WIP), a hot isostatic pressure (HIP), and a cold isostatic pressure (CIP).

9. The method of manufacturing an all-solid-state battery according to claim 2, wherein, when the two or more bicells are laminated, positive electrode current collectors are provided at the outermost portions in the laminating direction and are in contact with the free-standing positive electrodes.

10. The method of manufacturing an all-solid-state battery according to claim 1, wherein, during the manufacturing of the all-solid-state battery, both ends of the negative electrode contained in any one of monocell or bicell are not in contact with the positive electrode contained in the adjacent monocell or bicell.
